# EUROPEAN PATENT SPECIFICATION

(11) **EP 3 786 234 B1**
(45) Date of publication and mention of the grant of the patent: **16.04.2025**
(21) Application number: 19793034.0
(22) Date of filing: 18.04.2019
(51) Int. Cl.: C08L 101/02, C08F 8/30, C08K 5/5475, C08C 19/22

(54) **POLYMER COMPOSITION, METHOD OF PRODUCING CYANO GROUP-CONTAINING POLYMER, AND CYANOGROUP-CONTAINING POLYMER COMPOSITION**
POLYMERZUSAMMENSETZUNG, HERSTELLUNGSVERFAHREN FÜR CYANOGRUPPENHALTIGES POLYMER UND CYANOGRUPPENHALTIGE POLYMERZUSAMMENSETZUNG
COMPOSITION POLYMÈRE, PROCÉDÉ DE PRODUCTION D'UN POLYMÈRE CONTENANT UN GROUPE CYANO, ET COMPOSITION POLYMÈRE CONTENANT UN GROUPE CYANO

(30) Priority: 26.04.2018 JP 2018085256
(43) Date of publication of application: 03.03.2021
(73) Proprietor: Zeon Corporation, Tokyo 100-8246 (JP)
(72) Inventor: YASU, Yusuke, Tokyo 100-8246 (JP)
(74) Representative: Maiwald GmbH
(86) International application number: PCT/JP2019/016610
(87) International publication number: WO 2019/208380

(56) References cited:
- WO-A2-2010/085622
- WO-A2-2010/085631
- JP-A- 2003 507 451
- JP-A- 2005 232 364
- JP-A- 2007 519 666
- JP-A- 2012 025 939
- JP-A- 2012 515 839
- JP-A- 2014 523 893
- US-A- 4 988 774

## Description

### TECHNICAL FIELD

The present disclosure relates to a polymer composition and a method of producing a cyano group-containing polymer using the same, and a cyano group-containing polymer composition.

### BACKGROUND

Polymers containing cyano groups have been conventionally used in a wide variety of applications. Olefinic double bonds may adversely affect characteristics, such as the weather resistance and the elasticity, of cyano group-containing rubber materials. Methods of producing cyano group-containing rubber materials with a decreased number of olefinic double bonds have been proposed. For example, JPH01045402A (PTL 1) proposed a method of selectively hydrogenating carbon-carbon double bonds in a nitrile group containing-copolymer composed of a conjugated diene and (meth)acrylonitrile as essential components in the presence of a particular catalyst.

Further, Kochi *et al.* (NPL 1) proposed a method of producing a copolymer which contains cyano groups but no olefinic double bonds through copolymerization of ethylene and acrylonitrile in the presence of a palladium catalyst.

Even further, as a technique for hydrocyanating a compound having an olefinic double bond to introduce a cyano group, Morandi *et al.* (PTL 2) proposed a method of producing adiponitrile (i.e., synthetic intermediate of Nylon 6-6) by contact hydrocyanation of pentenenitrile catalyzed by a zero-valent nickel in the presence of two Lewis acid accelerators.

Still further, as a method of hydrocyanating olefins using an alkyl nitrile, JPH02006451A (NPL 2) proposed a technique in which an olefin is subjected to a reaction with butyronitrile in the presence of a nickel catalyst to thereby hydrocyanate the olefin.

WO 2010/085631 A2 (PTL 3) discloses a method for producing a cyano group-containing polymer by reacting an olefinic double bond-containing polymer with a polycyano compound using a lanthanide-based catalyst, which includes a lanthanide-containing compound, an alkylating agent, and a halogen source.

WO 2010/085622 A2 (PTL 4) discloses a method for preparing a functionalized polymer, wherein a reactive polymer is reacted with a nitrile compound containing a protected amino group.

JP 2005 232364 A (PTL 5) discloses a modified conjugated-diene polymer by reacting a conjugated-diene polymer with a modifier, which can be 2-cyanoethyl triethoxysilane.

US 4 988 774 A (PTL 6) discloses a cyano-containing polymer obtained by reacting a polymer having double bonds with hydrogen cyanide in the presence of a catalyst having formula: Ni[P(OR¹)₃]n,
in which R¹ stands for alkyl or aryl and n denotes the number 3 or 4, and a co-catalyst of the formula:

AlR²₍₃₋ₘ₎Halₘ,

in which R² stands for hydrogen, alkyl or cyano, Hal stands for chlorine, bromine or cyano and m denotes the number 0, 1, 2 or 3, in inert organic solvents at a temperature of 35 °C to 100 °C.

### CITATION LIST

### Patent Literature

PTL 1: JPH01045402A
PTL 2: JPH02006451A
PTL 3: WO 2010/085631 A2
PTL 4: WO 2010/085622 A2
PTL 5: JP 2005 232364 A
PTL 6: US 4 988 774 A

### Non-patent Literature

NPL 1: Kochi, Takuya, et al. "Formation of linear copolymers of ethylene and acrylonitrile catalyzed by phosphine sulfonate palladium complexes." Journal of the American Chemical Society 129.29 (2007): 8948-8949.
NPL 2: Fang, Xianjie, Peng Yu, and Bill Morandi. "Catalytic reversible alkene-nitrile interconversion through controllable transfer hydrocyanation." Science 351.6275 (2016): 832-836.

### SUMMARY

### (Technical Problem)

The method of PTL 1, however, has a constraint in that a pressure-resistant reaction vessel is required because high-pressure hydrogen must be used for a hydrogenation reaction.

In addition, production of a high molecular weight polymer is difficult with the method of NPL 1.

Further, in the method described in PTL 2, highly toxic hydrogen cyanide is required, which may pose a problem.

Further, the methods of PTL 2 and NPL 2 are techniques for hydrocyanation of low molecular weight compounds, and thus PTL 2 and NPL 2 fail to suggest hydrocyanation of polymers.

Accordingly, there have been a demand for a method which allows cyano groups to be efficiently introduced to a polymer while decreasing olefinic double bonds, to thereby enable convenient production of a cyano group-containing polymer.

It could therefore be helpful to provide a technique which allows cyano groups to be efficiently introduced to a polymer while decreasing olefinic double bonds, to thereby enable convenient production of a cyano group-containing polymer, and a composition containing a cyano group-containing polymer having a decreased number of olefinic double bonds.

### (Solution to Problem)

The present inventor has diligently studied ways to address the above challenge. The present inventor has conceived that a polymer in which cyano groups have been introduced while olefinic double bonds have been decreased could be produced through hydrocyanation of an olefinic double bond-containing polymer such as polybutadiene. The present inventor has conducted further studies and found that, when an olefinic double bond-containing polymer and a certain cyano group-containing compound are subjected to a reaction in the presence of a hydrocyanation catalyst, olefinic double bonds in the olefinic double bond-containing polymer are selectively hydrocyanated, which efficiently introduces cyano groups to the polymer while decreasing olefinic double bonds, thereby completing the present disclosure.

More specifically, the present invention is directed to advantageously solve the above problem, and a polymer composition of the present invention comprises an olefinic double bond-containing polymer; and a cyano group-containing compound represented by the following Formula (1):

R-C₂H₄-CN ... (1)
wherein in the Formula (1), R is an unsubstituted alkyl group and has 30 or less carbon atoms;
and a hydrocyanation catalyst, wherein the hydrocyanation catalyst includes a nickel complex, a co-catalyst and a ligand, wherein the nickel complex is bis (1.5-cyclooctadiene) nickel, the co-catalyst is dimethylchloro aluminum, and the ligand is bis[2-(diphenyl phosphino) phenyl]ether.
According to the presently disclosed polymer composition containing the aforementioned components, the olefinic double bond-containing polymer is hydrocyanated to efficiently introduce cyano groups to the polymer while decreasing olefinic double bonds, to thereby enable convenient production of a cyano group-containing polymer.

Here, in the presently disclosed polymer composition, the olefinic double bond-containing polymer has a weight average molecular weight of preferably 1,000 or more and 1,000,000 or less. When the olefinic double bond-containing polymer has a weight average molecular weight within the above range, side reactions such as gelling caused by the olefinic double bond-containing polymer can be prevented. That enables efficient production of a cyano group-containing polymer.

In addition, in the presently disclosed polymer composition, a content of the cyano group-containing compound relative to the olefinic double bond-containing polymer is preferably 0.05% by mol or more and 200000% by mol or less. The content of the cyano group-containing compound in the polymer composition within the above range enables the cyano group-containing polymer to be produced more efficiently using the presently disclosed polymer composition.

According to the present invention, R in the Formula (1) is an unsubstituted alkyl group and has 30 or less carbon atoms. R in the Formula (1) having 30 or less carbon atoms can improve the yield of a cyano group-containing polymer upon production of the cyano group-containing polymer using the presently disclosed polymer composition.

Additionally, the present disclosure is directed to advantageously solve the above problem, and a method of producing a cyano group-containing polymer of the present disclosure comprises a reaction step of using the presently disclosed polymer composition to subject the olefinic double bond-containing polymer to a hydrocyanation reaction. The reaction step of using the presently disclosed polymer composition to subject the olefinic double bond-containing polymer to a hydrocyanation reaction can efficiently introduce cyano groups to the polymer while decreasing olefinic double bonds, to thereby enable convenient production of a cyano group-containing polymer.

In addition, in the presently disclosed method of producing a cyano group-containing polymer, a decreased ratio of olefinic double bonds in the olefinic double bond-containing polymer is preferably 0.1% by mol or more and 100% by mol or less, the decreased ratio representing a ratio of a decrease in olefinic double bonds due to the hydrocyanation reaction. The decreased ratio of olefinic double bonds due to the hydrocyanation reaction of within the above range can provide a cyano group-containing polymer where olefinic double bonds have been favorably decreased.

In the presently disclosed method of producing a cyano group-containing polymer, the reaction step is preferably carried out at a temperature higher than or equal to a boiling point of a vinyl group-containing compound represented by the following Formula (2):

R-CH=CH₂ ... (2)

wherein in the Formula (2), R is the same as R in the Formula (1). Carrying out the reaction step at a temperature higher than or equal to the boiling point of a vinyl group-containing compound represented by the Formula (2) can promote the hydrocyanation reaction.

Further, the present invention is directed to advantageously solve the above problem, and a cyano group-containing polymer composition of the present disclosure comprises a cyano group-containing polymer; and a hydrocyanation catalyst, wherein the hydrocyanation catalyst includes a nickel complex, a co-catalyst and a ligand, wherein the nickel complex is bis (1.5-cyclooctadiene) nickel, the co-catalyst is dimethylchloro aluminum, and the ligand is bis[2-(diphenyl phosphino) phenyl]ether.

Production of a cyano group-containing polymer by carrying out the above-described hydrocyanation reaction using the presently disclosed polymer composition can provide a cyano group-containing polymer composition containing such components.

### (Advantageous Effect)

According to the present invention, a polymer composition is provided which is used to efficiently introduce cyano groups to a polymer while decreasing olefinic double bonds, to thereby enable convenient production of a cyano group-containing polymer, and a method of producing a cyano group-containing polymer using such a polymer composition. Further, according to the present invention, a cyano group-containing polymer composition is provided which includes a cyano group-containing polymer having a decreased number of olefinic double bonds.

### DETAILED DESCRIPTION

The present invention will be described below. Here, a polymer composition of the present invention is used to produce a cyano group-containing polymer in a method of producing a cyano group-containing polymer according to the present invetion. The presently disclosed method of producing a cyano group-containing polymer is a method which uses the presently disclosed polymer composition to efficiently introduce cyano groups to the polymer while decreasing olefinic double bonds, to thereby enable convenient production of a cyano group-containing polymer. Further, the presently disclosed cyano group-containing polymer composition is a composition containing a cyano group-containing polymer having a decreased number of olefinic double bonds, and can be used favorably for production of products such as rubber molded articles, for example.

### (Polymer composition)

The presently disclosed polymer composition contains an olefinic double bond-containing polymer, a cyano group-containing compound, an a hydrocyanation catalyst, and optionally contains a solvent and/or an optional component.

### <Olefinic double bond-containing polymer>

The olefinic double bond-containing polymer contained in the presently disclosed polymer composition is a polymer which undergoes a hydrocyanation reaction with the cyano group-containing compound in the presence of the hydrocyanation catalyst. In the present disclosure, the olefinic double bond-containing polymer is not particularly limited as long as it is a polymer having carbon-carbon double bonds as olefinic double bonds in the molecule. Note that the olefinic double bond-containing polymer of the present disclosure typically contains no cyano group.

Examples of the olefinic double bond-containing polymer include polymers containing a monomer unit derived from a compound having two or more olefinic double bonds, such as a conjugated diene compound (e.g., 1,3-butadiene and isoprene) and a non-conjugated diene compound. Specific example of the olefinic double bond-containing polymer include, for example, polybutadiene (PBD), polyisoprene (PIP), polycyclopentene (PCP), a styreneisoprene-styrene block copolymer (SIS), a styrene-butadiene copolymer (SBD), an acrylic polymer (ACL), a polybutadiene-polyisoprene copolymer (PBD-PI), polydicyclopentadiene, and polynorbornene. Of these, PBD, PIP, PCP, SIS, ACL, and PBD-PI are preferred, and PBD, PCP, SIS, and ACL are more preferred. Note that these can be used alone or in combination of two or more thereof in any proportion.

When the olefinic double bond-containing polymer is a polymer containing a monomer unit derived from a conjugated diene compound, the ratio of 1,2-vinyl bonds and 1,4-vinyl bonds in the olefinic double bond-containing polymer in terms of the molar ratio (1,2-vinyl bonds/ 1,4-vinyl bonds) is typically from 99/1 to 1/99, preferably from 95/5 to 5/95, and particularly preferably from 90/10 to 10/90.

### [Weight average molecular weight (Mw)]

The olefinic double bond-containing polymer has a weight average molecular weight (Mw) of preferably 1,000 or more, more preferably 2,000 or more, even more preferably 3,000 or more, still even more preferably 5,000 or more, and preferably 1,000,000 or less, more preferably 600,000 or less, even more preferably 500,000 or less, still even more preferably 400,000 or less, particularly preferably 200,000 or less, most preferably 100,000 or less. When the olefinic double bond-containing polymer has a weight average molecular weight within one of the above ranges, side reactions such as gelling caused by the olefinic double bond-containing polymer can be further prevented. This enables the cyano group-containing polymer to be more efficiently produced. In addition, when the olefinic double bond-containing polymer has a weight average molecular weight equal to or lower than one of the above upper limits, the number of olefinic double bonds can be decreased efficiently. Note that, in the present invention, , the weight average molecular weight (Mw) of the olefinic double bond-containing polymer is measured by gel permeation chromatography, as disclosed further below.

### [Molecular weight distribution]

The olefinic double bond-containing polymer has a molecular weight distribution (Mw/Mn) of preferably 1 or more, and preferably 10 or less, more preferably 6 or less, even more preferably 4 or less, particularly preferably 2 or less. When the olefinic double bond-containing polymer has a molecular weight distribution within one of the above ranges, side reactions such as gelling caused by the olefinic double bond-containing polymer can be further prevented. This enables the cyano group-containing polymer to be produced further efficiently. Note that, in the present disclosure, the molecular weight distribution (Mw/Mn) refers to the ratio of the weight average molecular weight (Mw) with respect to the number average molecular weight (Mn), of the olefinic double bond-containing polymer. The number average molecular weight (Mn) of the olefinic double bond-containing polymer can be measured by gel permeation chromatography.

### [Method of producing olefinic double bond-containing polymer]

The olefinic double bond-containing polymer contained in the presently disclosed polymer composition can be produced by conventionally known methods, such as emulsion polymerization, suspension polymerization, and solution polymerization. Alternatively, a commercially available product may also be used as the olefinic double bond-containing polymer. Note that olefinic double bond-containing polymer used in the present disclosure is typically not hydrogenated.

### [Content of olefinic double bond-containing polymer]

The content of the olefinic double bond-containing polymer in the presently disclosed polymer composition is preferably 1% by mass or more and 100% by mass or less, relative to 100% by mass of the total solid content in the polymer composition. When the content of the olefinic double bond-containing polymer in the polymer composition is equal to or more than the above lower limit, the hydrocyanation reaction favorably proceeds upon production of the cyano group-containing polymer using the presently disclosed polymer composition. On the other hand, when the content of the olefinic double bond-containing polymer in the polymer composition is equal to or less than the above upper limit, any residue of the catalyst after the hydrocyanation reaction can be easily removed upon production of the cyano group-containing polymer using the presently disclosed polymer composition.

### <Cyano group-containing compound>

The cyano group-containing compound contained in the presently disclosed polymer composition is a compound which is capable of subjecting to a hydrocyanation reaction with the above-mentioned olefinic double bond-containing polymer in the presence of the hydrocyanation catalyst, and is represented by the following Formula (1):

R-C₂H₄-CN ... (1)

The above-mentioned cyano group-containing compound hydrocyanates olefinic double bonds included in the olefinic double bond-containing polymer to produce a vinyl group-containing compound represented by the following Formula (2):

R-CH=CH₂ ... (2)

Here, in the above formulae (1) and (2), R is an unsubstituted alkyl group and has 30 or less carbon atoms.

The alkyl group may be linear or branched. Examples of the alkyl group include, for example, methyl group, ethyl group, n-propyl group, isopropyl group, n-butyl group, sec-butyl group, t-butyl group, n-pentyl group, n-hexyl group, and n-heptyl group.

Here, in view of enabling efficient production of the cyano group-containing polymer using the presently disclosed polymer composition, R in the above formulae (1) and (2) is an unsubstituted alkyl group and has 30 or less carbon atoms.

In the present invention, , specific examples of the cyano group-containing compound represented by the above Formula (1) include propionitrile, butyronitrile, pentanitrile, and decanenitrile. Of these, the cyano group-containing polymer represented by the above Formula (1) is preferably propionitrile, butyronitrile, or pentanitrile, and is more preferably butyronitrile, in view of improving the solubility of the cyano group-containing compound to a solvent upon production of the cyano group-containing polymer using the presently disclosed polymer composition to thereby improve the productivity of the cyano group-containing polymer.

Here, in the cyano group-containing compound represented by the above Formula (1), R in the Formula (1) has 30 or less carbon atoms, more preferably 10 or less carbon atoms, and even more preferably 5 or less carbon atoms. When R has 30 or less carbon atoms, a vinyl group-containing compound represented by the following Formula (2):

R-CH=CH₂ ... (2)

wherein in the Formula (2), R is the same as R in the Formula (1)] which is generated through a hydrocyanation reaction of the olefinic double bond-containing polymer with the cyano group-containing compound represented by the Formula (1) is promoted to vaporize and be discharged from the reaction system. That promotes the hydrocyanation reaction which is an equilibrium reaction, thereby improving the yield of the cyano group-containing polymer.

### [Method of producing cyano group-containing compound]

Here, the method of producing the cyano group-containing compound is not particularly limited, and the cyano group-containing compound can be produced by conventionally known methods. Alternatively, a commercially available product may also be used as the cyano group-containing compound.

### [Content of cyano group-containing compound]

The content of the cyano group-containing compound represented by the above Formula (1) in the presently disclosed polymer composition is preferably 0.05% by mol or more, more preferably 0.2% by mol or more, even more preferably 0.5% by mol or more, and is preferably 200000% by mol or less, more preferably 10000% by mol or less, even more preferably 5000% by mol or less, still more preferably 1000% by mol or less, particularly preferably 100% by mol or less, most preferably 25% by mol or less, relative to 100% by mol of the olefinic double bond-containing polymer. When the content of the cyano group-containing compound represented by the above Formula (1) in the polymer composition is within one of the above ranges, the hydrocyanation reaction favorably proceeds in the method of producing a cyano group-containing polymer using the presently disclosed polymer composition.

### <Hydrocyanation catalyst>

The hydrocyanation catalyst included in the presently disclosed polymer composition functions to catalyze a hydrocyanation reaction of the olefinic double bond-containing polymer and the cyano group-containing compound represented by the above Formula (1). The hydrocyanation catalyst includes a nickel complex, co-catalyst, and a ligand.

### [Nickel complex]

Here, examples of the nickel complex include, for example, nickel(II) chloride, [1,1'-bis(diphenylphosphino)ferrocene] dichloronickel(II), [1,2-bis (diphenylphosphino)ethane] dichloronickel(II), nickel(II) trifluoromethane sulfonate, bis(2,4-pentanedionato) nickel(II) hydrate, and bis(1,5-cyclo octadiene) nickel. In the present invention, the nickel complex is bis(1,5-cyclooctadiene) nickel in view of allowing a hydrocyanation reaction to favorable proceed in the method of producing a cyano group-containing polymer using the presently disclosed polymer composition.

### - Content of nickel complex -

Here, the content of the nickel complex in the polymer composition is preferably 0.01% by mol or more, more preferably 0.05% by mol or more, and is preferably 10% by mol or less, more preferably 5% by mol or less, relative to 100% by mol of the olefinic double bond-containing polymer. When the content of the nickel complex in the polymer composition is within one of the above ranges, the hydrocyanation reaction is allowed to proceed more favorably in the method of producing a cyano group-containing polymer using the presently disclosed polymer composition.

### [Co-catalyst]

Examples of the co-catalyst include, for example, Lewis acids, such as trichloro aluminum, tribromo aluminum, dichloromethyl aluminum, dichloroethyl aluminum, diethylchloro aluminum, and dimethylchloro aluminum. In the present invention the co-catalyst is dimethylchloro aluminum in view of allowing the hydrocyanation catalyst to exhibit its catalytic function favorably in the method of producing a cyano group-containing polymer using the presently disclosed polymer composition.

### - Content of co-catalyst -

In addition, the content of the co-catalyst in the polymer composition is preferably 0.01% by mol or more, more preferably 0.05% by mol or more, and is preferably 10% by mol or less, more preferably 5% by mol or less, relative to 100% by mol of the olefinic double bond-containing polymer. When the content of the co-catalyst in the polymer composition is within one of the above ranges, the hydrocyanation catalyst is allowed to exhibit its catalyst function more favorably in the method of producing a cyano group-containing polymer using the presently disclosed polymer composition.

### [Ligand]

Examples of the ligand include, for example, triphenyl phosphine, tricyclohexyl phosphine, triethyl phosphine, triparafluorophenyl phosphine, triparatrifluoro methylphenyl phosphine, triparamethoxyphenyl phosphine, and bis[2-(diphenyl phosphino) phenyl]ether. In the present invention the ligand is bis[2-(diphenyl phosphino) phenyl]ether in view of allowing the hydrocyanation catalyst to exhibit its catalytic function even more favorably in the method of producing a cyano group-containing polymer using the presently disclosed polymer composition.

### - Content of ligand-

The content of the ligand in the polymer composition is preferably 0.01% by mol or more, more preferably 0.05% by mol or more, and is preferably 10% by mol or less, more preferably 5% by mol or less, relative to 100% by mol of the olefinic double bond-containing polymer. When the content of the ligand in the polymer composition is within one of the above ranges, the hydrocyanation catalyst is allowed to exhibit its catalytic function still even more favorably in the method of producing a cyano group-containing polymer using the presently disclosed polymer composition.

### [Solvent]

Further, the solvent which may be optionally contained in the presently disclosed polymer composition is not particularly limited, and may be, for example, toluene, xylene, benzene, chlorobenzene, tetrahydrofuran, or cyclotoluene. Of these, toluene, xylene, and benzene are preferred, and toluene is more preferred as the solvent, in view of improved solubility of the cyano group-containing compound represented by the above Formula (1) to the solvent to thereby increase the productivity of the cyano group-containing polymer in the method of producing a cyano group-containing polymer using the presently disclosed polymer composition. The presently disclosed polymer composition may contain one of these solvents alone, or may contain two or more of these.

### - Content of solvent -

The content of the solvent which may be contained in the polymer composition is preferably 50 parts by mass or more and 2000 parts by mass or less, relative to 100 parts by mass of the olefinic double bond-containing polymer. When the content of the solvent in the polymer composition is within the above range, side reactions such as gelling caused by the olefinic double bond-containing polymer can be sufficiently prevented. This enables the cyano group-containing polymer to be produced highly efficiently.

### [Optional component]

Further, an optional component which may be optionally contained in the polymer composition is not particularly limited, and examples thereof include catalysts other than the above-described hydrocyanation catalyst, for example. The optional component may be included in a range not impairing the effect of the present disclosure.

### <Method of preparing polymer composition>

The method of producing the presently disclosed polymer composition is not particularly limited, and the polymer composition can be prepared by mixing the above-described components by a well-known method.

The presently disclosed polymer composition can be favorably used for producing a cyano group-containing polymer. Hereinafter, although a method of producing a cyano group-containing polymer using the presently disclosed polymer composition will be described, applications of the presently disclosed polymer composition is not limited to the following example.

### <Method of producing cyano group-containing polymer>

A presently disclosed method of producing a cyano group-containing polymer includes a reaction step of using the presently disclosed polymer composition to subject the olefinic double bond-containing polymer to a hydrocyanation reaction, and may optionally include a recovery step.

### <Reaction step>

In the presently disclosed method of producing a cyano group-containing polymer, the reaction step includes using the presently disclosed polymer composition to subject the olefinic double bond-containing polymer to a hydrocyanation reaction.

### [Hydrocyanation reaction]

The hydrocyanation reaction in the reaction step is carried out by subjecting the olefinic double bond-containing polymer and the cyano group-containing compound represented by the above Formula (1), in the presently disclosed polymer composition, to a reaction catalyzed by the hydrocyanation catalyst contained in the polymer composition. In this hydrocyanation reaction, olefinic double bonds in the olefinic double bond-containing polymer are selectively hydrocyanated to yield a cyano group-containing polymer in which cyano groups are efficiently introduced to the polymer, as well as a vinyl group-containing compound represented by the following Formula (2):

R-CH=CH₂ ... (2).

R in the Formula (2) is the same as R in the Formula (1) described above, and a description thereof will thus be omitted.

Here, examples of the above-mentioned cyano group-containing polymer include polymers represented by the following Formula (4) or (5): 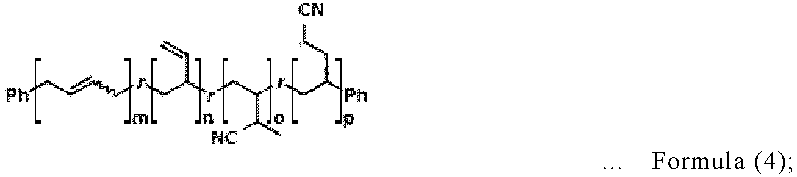 and

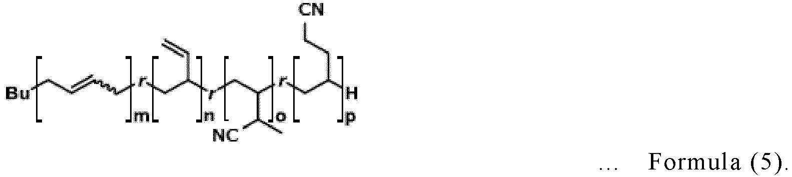

In the above Formula (4), Ph represents phenyl group, each r represents random, and *m, n, o,* and *p* each represent the number of repetitions.

Alternatively, in the above Formula (5), Bu represents butadiene, each r represents random, and *m, n, o,* and *p* each represents the number of repetitions.

### - Reaction temperature -

The reaction temperature in the reaction step is preferably 20 °C or higher, more preferably 40 °C or higher, and is preferably 200 °C or lower, more preferably 150 °C or lower, even more preferably 120 °C or lower. The reaction temperature can be, for example, about 110 °C. When the reaction temperature is equal to or higher than one of the above lower limits, the hydrocyanation reaction is allowed to proceed sufficiently in the reaction step. On the other hand, when the reaction temperature is equal to or lower than one of the above upper limits, decomposition and gelling of the olefinic double bond-containing polymer and the cyano group-containing compound represented by the above Formula (1) can be sufficiently prevented in the reaction step.

Here, the above-mentioned reaction step is preferably carried out at a temperature equal to or higher than the boiling point of a vinyl group-containing compound represented by the above Formula (2). The hydrocyanation reaction is an equilibrium reaction. Thus, the reaction temperature of equal to or higher than the boiling point of a vinyl group-containing compound represented by the above Formula (2) promotes the vinyl group-containing compound to vaporize and be discharged from the reaction system, which promotes the hydrocyanation reaction.

### - Reaction time-

Further, the reaction time in the reaction step is preferably 1 minute or longer, more preferably 5 minutes or longer, and is preferably 48 hours or shorter, more preferably 24 hours or shorter. The reaction time can be, for example, about 30 minutes. When the reaction time is equal to or shorter than one of the above lower limits, the hydrocyanation reaction is allowed to proceed sufficiently in the reaction step. On the other hand, when the reaction time is equal to or shorter than one of the above upper limits, the time required to produce the cyano group-containing polymer is shortened, to thereby increase the processability.

### [Decreased ratio of olefinic double bonds]

The decreased ratio of olefinic double bonds in the olefinic double bond-containing polymer, which represents a ratio of a decrease in olefinic double bonds due to the above-mentioned hydrocyanation reaction, is preferably 0.1% by mol or more, more preferably 50% by mol or more, and is typically preferably 100% by mol or less. When the decreased ratio of double bonds is within one of the above ranges, a cyano group-containing polymer having a decreased number of olefinic double bonds can be efficiently produced by the presently disclosed method of producing a cyano group-containing polymer. Note that the decreased ratio of olefinic double bonds can be determined by the method described in EXAMPLE section in the present specification.

### [Hydrocyanation ratio]

The cyano group-containing polymer produced by the presently disclosed method of producing a cyano group-containing polymer preferably has a cyanation ratio of preferably 0.1% or more, more preferably 50% or more, and typically 100% or less. When the cyanation ratio is within one of the above ranges, a cyano group-containing polymer having a decreased number of olefinic double bonds can be efficiently produced by the presently disclosed method of producing a cyano group-containing polymer. Note that the hydrocyanation ratio can be determined by the method described in EXAMPLE section in the present specification.

### <Recovery step>

The presently disclosed method of producing a cyano group-containing polymer may optionally include a recovery step, in which the resultant cyano group-containing polymer is recovered after the above-mentioned reaction step. The method of recovering the cyano group-containing polymer is not particularly limited, and the cyano group-containing polymer can be recovered, for example, by dropping the reaction solution resultant from the reaction step into a poor solvent such as methanol to solidify the cyano group-containing polymer, and then separating the solidified cyano group-containing polymer using solid-liquid separation means such as filtration.

### [Weight average molecular weight of cyano group-containing polymer]

The cyano group-containing polymer produced by the presently disclosed production method has a weight average molecular weight of preferably 1,000 or more, more preferably 30,000 or more, more preferably 50,000 or more, and preferably 500,000 or less, more preferably 100,000 or less. When the cyano group-containing polymer has a weight average molecular weight within one of the above ranges, the cyano group-containing polymer produced by the presently disclosed method of producing a cyano group-containing polymer can be used favorably for production of products such as rubber molded articles, for example.

### [Molecular weight distribution]

The cyano group-containing polymer produced by the presently disclosed production method has a molecular weight distribution (which is determined as weight average molecular weight / number average molecular weight) of preferably 1.0 or more, and preferably 4.0 or less, more preferably 2.0 or less. When the cyano group-containing polymer has a the molecular weight distribution within one of the above ranges, the cyano group-containing polymer produced by the presently disclosed production method can be used more favorably for production of products such as rubber molded articles, for example.

The weight average molecular weight (Mw) and the number average molecular weight (Mn) of the cyano group-containing polymer produced by the presently disclosed production method can be measured by gel permeation chromatography.

### [Glass-transition temperature]

The cyano group-containing polymer produced by the presently disclosed production method has a glass-transition temperature of preferably -150 °C or higher, more preferably -50 °C or higher, even more preferably -10 °C or higher, and preferably 50 °C or lower, more preferably 25 °C or lower. When the cyano group-containing polymer has a glass-transition temperature within one of the above ranges, the produced cyano group-containing polymer can be used even more favorably for production of products such as rubber molded articles, for example. Note that the glass-transition temperature can be measured by the method described in EXAMPLE section in the present specification.

### <Cyano group-containing polymer composition>

The presently disclosed cyano group-containing polymer composition contains a cyano group-containing polymer and a hydrocyanation catalyst, and optionally further contains a solvent and/or an optional component.

Here, the cyano group-containing polymer contained in the cyano group-containing polymer composition has cyano groups, and optionally further has olefinic double bonds. Note that the properties of the cyano group-containing polymer contained in the cyano group-containing polymer composition, such as the weight average molecular weight of the cyano group-containing polymer, can be the same as those of the cyano group-containing polymer produced by the presently disclosed method of producing a cyano group-containing polymer.

Further, the solvent and/or the optional component which can be optionally contained in the cyano group-containing polymer composition may be similar to the solvents and optional components which can be optionally contained in the presently disclosed polymer composition, as well as a vinyl group-containing compound represented by the following Formula (3):

R-CH=CH₂ ... (3).

Note that R in Formula (3) is the same as R in the Formula (1), and a description thereof will be thus omitted here.

The cyano group-containing polymer composition can be produced by subjecting the presently disclosed polymer composition to a hydrocyanation reaction. More specifically, a reaction mixture resultant from the presently disclosed method of producing a cyano group-containing polymer can be used as a cyano group-containing polymer composition as it is.

In the presently disclosed cyano group-containing polymer composition, the proportion of the cyano group-containing polymer relative to the total solid content in the cyano group-containing polymer composition taken to be 100% is preferably 0.1% by mol or more and 100% by mol or less. When the proportion of the cyano group-containing polymer relative to the total solid content in the cyano group-containing polymer composition is within the above range, products such as rubber molded articles, for example, can be efficiently produced using the presently disclosed cyano group-containing polymer composition.

Further, in the presently disclosed cyano group-containing polymer composition, the proportion of the hydrocyanation catalyst (the total amount of the nickel complex, the co-catalyst, and the ligand) relative to the total solid content in the cyano group-containing polymer composition taken to be 100% is preferably 0.005% by mol or more and 10% by mol or less. When the proportion of the hydrocyanation catalyst relative to the total solid content in the cyano group-containing polymer composition is within the above range, removal of any remaining hydrocyanation catalyst is promoted after the presently disclosed cyano group-containing polymer composition is used for production of products such as rubber molded articles.

Further, the proportion of the vinyl group-containing compound in the presently disclosed cyano group-containing polymer composition relative to the total solid content in the cyano group-containing polymer composition taken to be 100% is preferably 0.1% by mol or more and 99% by mol or less. When the proportion of the vinyl group-containing compound relative to the total solid content in the cyano group-containing polymer composition is within the above range, removal or functionalization with functional groups of any remaining vinyl group-containing compounds is facilitated after the presently disclosed cyano group-containing polymer composition is used for production of products such as rubber molded articles.

### EXAMPLES

The following provides more specific explanation of the present disclosure through examples. However, the present disclosure is not limited by the following examples. In the following description, "%" and "parts" used in expressing quantities are by mass, unless otherwise specified.

In Examples and Comparative Examples, the proportion of olefinic double bonds, the decreased ratio of olefinic double bonds, the hydrocyanation ratio, the weight average molecular weight, the number average molecular weight, the molecular weight distribution, the glass-transition temperature, and the reaction efficiency were measured or evaluated in the following procedures.

### <Proportion of olefinic double bonds>

NMR spectra of a polymer before and after a reaction carried out in each of Examples and Comparative Examples were obtained. In each NMR spectrum, the proportion of olefinic double bonds in the polymer after the reaction, relative to the proportion of olefinic double bonds in the polymer before the reaction taken to be 100%, was determined from the NMR peak value derived from olefinic double bonds in the polymer before the reaction and the NMR peak value derived from olefinic double bonds in the polymer after the reaction. A smaller proportion of olefinic double bonds indicated a smaller number of olefinic double bonds remained in the polymer after the reaction.

### <Decreased ratio of olefinic double bonds>

A crude product resultant from a reaction was dissolved in deuterated chloroform and was subjected to a ¹HNMR measurement. The decreased ratio of olefinic double bonds was calculated from the ratio of the integrated value of signals in the vinyl region to the integrated value of signals in the aliphatic region in the ¹HNMR spectrum.

### <Hydrocyanation ratio>

In each of Examples and Comparative Examples, the hydrocyanation ratio was determined as follows. The difference between the NMR peak value derived from olefinic double bonds in the olefinic double bond-containing polymer before the reaction and the NMR peak value derived from olefinic double bonds in the resultant polymer after the reaction was determined, and the percentage of the difference was taken as the hydrocyanation ratio.

### <Weight average molecular weight, number average molecular weight, and molecular weight distribution>

The weight average molecular weight (Mw) and the number average molecular weight (Mn) of the polymer were measured by gel permeation chromatography, and the molecular weight distribution (Mw/Mn) of the polymer was then calculated.

The gel permeation chromatography was carried out using HLC-8320 (manufactured by Tosoh Corporation) as a gel permeation chromatography system having two TSKgel α-M columns (manufactured by Tosoh Corporation) connected in series, and a differential refractometer RI-8320 (manufactured by Tosoh Corporation) was used as a detector. The weight average molecular weight (Mw) and the number average molecular weight (Mn) of the polymer were determined in terms of standard polystyrene equivalent using tetrahydrofuran as an eluent solvent. The molecular weight distribution (Mw/Mn) was then calculated.

### <Glass-transition temperature (Tg)>

The glass-transition temperature (Tg) of the polymer produced by the reaction was measured using a differential scanning calorimeter (DSC; X-DSC7000 manufactured by Hitachi High-Tech Science Corporation) while the temperature was raised from -90 °C to 60 °C at 10 °C/min.

### <Evaluation of reaction efficiency>

As an indicator of the reaction efficiency, the difference between the hydrocyanation ratio and the proportion of vinyl groups relative to the number of all organic groups in the olefinic double bond-containing polymer, i.e., (the hydrocyanation ratio) - (the proportion of vinyl groups relative to the number of all organic groups in the olefinic double bond-containing polymer) was used. When the olefinic double bond-containing polymer was polybutadiene, the proportion of 1,2-vinyl bonds was used as the "proportion of vinyl groups relative to the number of all organic groups in the olefinic double bond-containing polymer". The reaction efficiency was rated based on the indicator according to the following criteria:
A ... The indicator ranged from 0 to 100;
B ... The indicator ranged from -40 to -1;
C ... The indicator ranged from -70 to -41; and
D ... The indicator ranged from -100 to -71.

A greater indicator indicated a higher reaction efficiency.

### (Example 1)

A pressure-resistant glass reactor under a nitrogen atmosphere was charged with 12.5 g of polybutadiene having a mass ratio of 1,2-vinyl bonds and 1,4-vinyl bonds (1,2-vinyl bonds/1,4-vinyl bonds) of 90/10, a weight average molecular weight of 5,800, and a molecular weight distribution of 1.31 as an olefinic double bond-containing polymer; and 30 mL of degassed and dehydrated butyronitrile as a cyano group-containing compound. Then, 0.12 parts (0.285% by mol) of bis(1,5-cyclooctadiene) nickel as a nickel complex relative to 100 parts of polybutadiene, 0.23 mL (0.285% by mol relative to polybutadiene) of dimethylchloro aluminum as a co-catalyst, and 0.24 parts (0.285% by mol) of bis[2-(diphenyl phosphino)phenyl]ether as a ligand relative to 100 parts of polybutadiene, were added. The mixture was subjected to a reaction under a nitrogen atmosphere at 120 °C for 17 hours. After the reaction, the proportion of olefinic double bonds, the decreased ratio of olefinic double bonds, the hydrocyanation ratio, the weight average molecular weight, the molecular weight distribution, and the glass-transition temperature of the resultant polymer were determined. The results are summarized in Table 1. Further, inclusion of the nickel complex, the co-catalyst, and the ligand used in Example 1 was confirmed in the reaction product from a ¹HNMR spectrum.

### (Example 2)

A reaction was carried out in the same procedure as in Example 1. Specifically, a pressure-resistant glass reactor under a nitrogen atmosphere was charged with 0.6 g of polybutadiene having a mass ratio of 1,2-vinyl bonds and 1,4-vinyl bonds (1,2-vinyl bonds/1,4-vinyl bonds) of 95/5, a weight average molecular weight of 44,500, and a molecular weight distribution of 1.03 as an olefinic double bond-containing polymer; 2 mL of degassed and dehydrated butyronitrile as a cyano group-containing compound; and 20 mL of toluene as a solvent. Then, 0.06 parts (2% by mol) of bis(1,5-cyclooctadiene) nickel as a nickel complex relative to 100 parts of polybutadiene, 0.22 mL (2% by mol relative to polybutadiene) of dimethylchloro aluminum as a co-catalyst, and 0.12 parts (2% by mol) of bis[2-(diphenyl phosphino)phenyl]ether as a ligand relative to 100 parts of polybutadiene, were added. The mixture was subjected to a reaction under a nitrogen atmosphere at 110 °C for 30 minutes. After the reaction, the proportion of olefinic double bonds, the decreased ratio of olefinic double bonds, the hydrocyanation ratio, the weight average molecular weight, the molecular weight distribution, and the glass-transition temperature of the resultant polymer were determined. The results are summarized in Table 1. Further, inclusion of the nickel complex, the co-catalyst, and the ligand used in Example 2 was confirmed in the reaction product from a ¹HNMR spectrum.

### (Example 3)

A reaction was carried out in the same procedure as in Example 1. Specifically, a pressure-resistant glass reactor under a nitrogen atmosphere was charged with 0.6 g of polybutadiene having a mass ratio of 1,2-vinyl bonds and 1,4-vinyl bonds (1,2-vinyl bonds/1,4-vinyl bonds) of 96/4, a weight average molecular weight of 120,000, and a molecular weight distribution of 1.10 as an olefinic double bond-containing polymer; 2 mL of degassed and dehydrated butyronitrile as a cyano group-containing compound; and 20 mL of toluene as a solvent. Then, 0.06 parts (2% by mol) of bis(1,5-cyclooctadiene) nickel as a nickel complex relative to 100 parts of polybutadiene, 0.22 mL (2% by mol relative to polybutadiene) of dimethylchloro aluminum as a co-catalyst, and 0.12 parts (2% by mol) of bis[2-(diphenyl phosphino)phenyl]ether as a ligand relative to 100 parts of polybutadiene, were added. The mixture was subjected to a reaction under a nitrogen atmosphere at 110 °C for 30 minutes. After the reaction, the proportion of olefinic double bonds, the decreased ratio of olefinic double bonds, the hydrocyanation ratio, the weight average molecular weight, the molecular weight distribution, and the glass-transition temperature of the resultant polymer were determined. The results are summarized in Table 1. Further, inclusion of the nickel complex, the co-catalyst, and the ligand used in Example 3 was confirmed in the reaction product from a ¹HNMR spectrum.

### (Example 4)

A reaction was carried out in the same procedure as in Example 1. Specifically, a pressure-resistant glass reactor under a nitrogen atmosphere was charged with 0.8 g of polybutadiene having a mass ratio of 1,2-vinyl bonds and 1,4-vinyl bonds (1,2-vinyl bonds/1,4-vinyl bonds) of 83/17, a weight average molecular weight of 64,000, and a molecular weight distribution of 1.07 as an olefinic double bond-containing polymer; 2 mL of degassed and dehydrated butyronitrile as a cyano group-containing compound; and 20 mL of toluene as a solvent. Then, 0.06 parts (1.8% by mol) of bis(1,5-cyclooctadiene) nickel as a nickel complex relative to 100 parts of polybutadiene, 0.22 mL (1.8% by mol relative to polybutadiene) of dimethylchloro aluminum as a co-catalyst, and 0.12 parts (1.8% by mol) of bis[2-(diphenyl phosphino)phenyl]ether as a ligand relative to 100 parts of polybutadiene, were added. The mixture was subjected to a reaction under a nitrogen atmosphere at 110 °C for 30 minutes. After the reaction, the proportion of olefinic double bonds, the decreased ratio of olefinic double bonds, the hydrocyanation ratio, the weight average molecular weight, the molecular weight distribution, and the glass-transition temperature of the resultant polymer were determined. The results are summarized in Table 1. Further, inclusion of the nickel complex, the co-catalyst, and the ligand used in Example 4 was confirmed in the reaction product from a ¹HNMR spectrum.

### (Example 5)

A reaction was carried out in the same procedure as in Example 1. Specifically, a pressure-resistant glass reactor under a nitrogen atmosphere was charged with 0.3 g of polybutadiene having a mass ratio of 1,2-vinyl bonds and 1,4-vinyl bonds (1,2-vinyl bonds/1,4-vinyl bonds) of 50/50, a weight average molecular weight of 61,000, and a molecular weight distribution of 1.03 as an olefinic double bond-containing polymer; 1 mL of degassed and dehydrated butyronitrile as a cyano group-containing compound; and 10 mL of toluene as a solvent. Then, 0.03 parts (2% by mol) of bis(1,5-cyclooctadiene) nickel as a nickel complex relative to 100 parts of polybutadiene, 0.11 mL (2% by mol relative to polybutadiene) of dimethylchloro aluminum as a co-catalyst, and 0.06 parts (2% by mol) of bis[2-(diphenyl phosphino)phenyl]ether as a ligand relative to 100 parts of polybutadiene, were added. The mixture was subjected to a reaction under a nitrogen atmosphere at 110 °C for 30 minutes. After the reaction, the proportion of olefinic double bonds, the decreased ratio of olefinic double bonds, the hydrocyanation ratio, the weight average molecular weight, the molecular weight distribution, and the glass-transition temperature of the resultant polymer were determined. The results are summarized in Table 1. Further, inclusion of the nickel complex, the co-catalyst, and the ligand used in Example 5 was confirmed in the reaction product from a ¹HNMR spectrum.

### (Example 6)

A reaction was carried out in the same procedure as in Example 1. Specifically, a pressure-resistant glass reactor under a nitrogen atmosphere was charged with 1 g of polycyclopentene (PCP) without branches having a weight average molecular weight of 500,000 and a molecular weight distribution of 2.00 as an olefinic double bond-containing polymer; 8 mL of degassed and dehydrated butyronitrile as a cyano group-containing compound; and 24 mL of toluene as a solvent. Then, 0.72 parts (2% by mol) of bis(1,5-cyclooctadiene) nickel as a nickel complex relative to 100 parts of polycyclopentene, 0.27 mL (2% by mol relative to polycyclopentene) of dimethylchloro aluminum as a co-catalyst, and 0.14 parts (2% by mol) of bis[2-(diphenyl phosphino)phenyl]ether as a ligand relative to 100 parts of polycyclopentene, were added. The mixture was subjected to a reaction under a nitrogen atmosphere at 110 °C for 4 hours. After the reaction, the proportion of olefinic double bonds, the decreased ratio of olefinic double bonds, the hydrocyanation ratio, the weight average molecular weight, the molecular weight distribution, and the glass-transition temperature of the resultant polymer were determined. The results are summarized in Table 1. Further, inclusion of the nickel complex, the co-catalyst, and the ligand used in Example 6 was confirmed in the reaction product from a ¹HNMR spectrum.

### (Reference Example 7)

A reaction was carried out in the same procedure as in Example 1. Specifically, a pressure-resistant glass reactor under a nitrogen atmosphere was charged with 0.6 g of polybutadiene having a mass ratio of 1,2-vinyl bonds and 1,4-vinyl bonds (1,2-vinyl bonds/1,4-vinyl bonds) of 95/5, a weight average molecular weight of 44,500, and a molecular weight distribution of 1.03 as an olefinic double bond-containing polymer; 2 mL of degassed and dehydrated 3-phenylpropionitrile as a cyano group-containing compound; and 20 mL of toluene as a solvent. Then, 0.06 parts (2% by mol) of bis(1,5-cyclooctadiene) nickel as a nickel complex relative to 100 parts of polybutadiene, 0.22 mL (2% by mol relative to polybutadiene) of dimethylchloro aluminum as a co-catalyst, and 0.12 parts by mass (2% by mol) of bis[2-(diphenyl phosphino)phenyl]ether as a ligand relative to 100 parts of polybutadiene, were added. The mixture was subjected to a reaction under a nitrogen atmosphere at 110 °C for 30 minutes. After the reaction, the proportion of olefinic double bonds, the decreased ratio of olefinic double bonds, the hydrocyanation ratio, the weight average molecular weight, the molecular weight distribution, and the glass-transition temperature of the resultant polymer were determined. The results are summarized in Table 1. Further, inclusion of the nickel complex, the co-catalyst, and the ligand used in Example 7 was confirmed in the reaction product from a ¹HNMR spectrum.

### (Example 8)

A reaction was carried out in the same procedure as in Example 1. Specifically, a pressure-resistant glass reactor under a nitrogen atmosphere was charged with 0.6 g of polybutadiene having a mass ratio of 1,2-vinyl bonds and 1,4-vinyl bonds (1,2-vinyl bonds/1,4-vinyl bonds) of 95/5, a weight average molecular weight of 44,500, and a molecular weight distribution of 1.03 as an olefinic double bond-containing polymer; 2 mL of decanenitrile as a cyano group-containing compound; and 20 mL of toluene as a solvent. Then, 0.06 parts (2% by mol) of bis(1,5-cyclooctadiene) nickel as a nickel complex relative to 100 parts of polybutadiene, 0.22 mL (2% by mol relative to polybutadiene) of dimethylchloro aluminum as a co-catalyst, and 0.12 parts (2% by mol) of bis[2-(diphenyl phosphino)phenyl]ether as a ligand relative to 100 parts of polybutadiene, were added. The mixture was subjected to a reaction under a nitrogen atmosphere at 110 °C for 30 minutes. After the reaction, the proportion of olefinic double bonds, the decreased ratio of olefinic double bonds, the hydrocyanation ratio, the weight average molecular weight, the molecular weight distribution, and the glass-transition temperature of the resultant polymer were determined. The results are summarized in Table 1. Further, inclusion of the nickel complex, the co-catalyst, and the ligand used in Example 8 was confirmed in the reaction product from a ¹HNMR spectrum.

### (Comparative Example 1)

A pressure-resistant glass reactor under a nitrogen atmosphere was charged with 0.6 g of polybutadiene having a mass ratio of 1,2-vinyl bonds and 1,4-vinyl bonds (1,2-vinyl bonds/1,4-vinyl bonds) of 95/5, a weight average molecular weight of 44,500, and a molecular weight distribution of 1.03 as an olefinic double bond-containing polymer; 2 mL of acrylonitrile as a cyano group-containing compound; and 20 mL of toluene as a solvent. Then, 0.06 parts (2% by mol) of bis(1,5-cyclooctadiene) nickel as a nickel complex relative to 100 parts of polybutadiene, 0.22 mL (2% by mol relative to polybutadiene) of dimethylchloro aluminum as a co-catalyst, and 0.12 parts (2% by mol) of bis[2-(diphenyl phosphino)phenyl]ether as a ligand relative to 100 parts of polybutadiene, were added. The mixture was subjected to a reaction under a nitrogen atmosphere at 110 °C for 17 hours. After the reaction, the proportion of olefinic double bonds, the decreased ratio of olefinic double bonds, the hydrocyanation ratio, the weight average molecular weight, the molecular weight distribution, and the glass-transition temperature of the resultant polymer were determined. The results are summarized in Table 1.

**Table 1**

| | | | Example 1 | Example 2 | Example 3 | Example 4 | Example 5 | Example 6 | Reference Example 7 | Example 8 | Comparative Example 1 |
|---|---|---|---|---|---|---|---|---|---|---|---|
| Olefinic double bond-containing polymer | Name | | PBD | PBD | PBD | PBD | PBD | PCP | PBD | PBD | PBD |
| | 1,2-vinyl bonds/1,4-vinyl bonds (mass ratio) | | 90/10 | 95/5 | 96/4 | 83/17 | 50/50 | - | 95/5 | 95/5 | 95/5 |
| | Content (g) | | 12.5 | 0.6 | 0.6 | 0.8 | 0.3 | 1 | 0.6 | 0.6 | 0.6 |
| | Weight average molecular weight | | 5,800 | 44,500 | 120,000 | 64,000 | 61,000 | 500,000 | 44,500 | 44,500 | 44,500 |
| | Molecular weight distribution | | 1.31 | 1.03 | 1.10 | 1.07 | 1.03 | 2.00 | 1.03 | 1.03 | 1.03 |
| Cyano group-containing compound | Name | | butyronitrile | butyronitrile | butyronitrile | butyronitrile | butyronitrile | butyronitrile | 3-phenyl propionitrile | decanenitrile | acrylonitrile |
| | Content (mL) | | 30 mL | 2 mL | 2 mL | 2 mL | 1 mL | 8 mL | 2 mL | 2 mL | 2 mL |
| | Content (% by mol relative to 100 % by mol of olefinic double bond-containing polymer) | | 148 | 180 | 180 | 180 | 90 | 544 | 138 | 153 | 65.4 |
| Solvent | Name | | - | taluene | taluene | toluene | taluene | taluene | toluene | taluene | tolnene |
| | Content | | - | 20 mL | 20 mL | 20 mL | 10 mL | 24 mL | 20 mL | 20 mL | 20 mL |
| Hydrocyanation catalyst | Nickel complex | Name | Ni(COD)₂ | Ni(COD)₂ | Ni(COD)₂ | Ni(COD)₂ | Ni(COD)₂ | Ni(COD)₂ | Ni(COD)₂ | Ni(COD)₂ | Ni(COD)₂ |
| | | Content | 0.12 parts by mass (0.285% by mol) | 0.06 parts by mass (2% by mol) | 0.06 parts by mass (2% by mol) | 0.06 parts by mass (1.8% by mol) | 0.03 parts by mass (2% by mol) | 0.72 parts by mass (2% by mol) | 0.06 parts by mass (2% by mol) | 0.06 parts by mass (2% by mol) | 0.06 parts by mass (2% by mol) |
| | Co-catalyst | Type | dimethylchloro aluminum | dimethylchloro aluminum | dimethylchloro aluminum | dimethylchloro aluminum | dimethylchloro aluminum | dimethylchloro aluminum | dimethylchloro aluminum | dimethylchloro aluminum | dimethylchloro aluminum |
| | | Content | 0.23 mL (0.285% by mol) | 0.22 mL (2% by mol) | 0.22 mL (2% by mol) | 0.22 mL (1.8% by mol) | 0.11 mL (2% by mol) | 0.27 mL (2% by mol) | 0.22 mL (2% by mol) | 0.22 mL (2% by mol) | 0.22 mL (2% by mol) |
| | Ligand | Type | bis[2-(diphenyl phosphino) phenyl]ether | bis[2-(diphenyl phosphino) phenyl]ether | bis[2-(diphenyl phosphino) phenyl]ether | bis[2-(diphenyl phosphino) phenyl]ether | bis[2-(diphenyl phosphino) phenyl]ether | bis[2-(diphenyl phosphino) phenyl]ether | bis[2-(diphenyl phosphino) phenyl]ether | bis[2-(diphenyl phosphino) phenyl]ether | bis[2-(diphenyl phosphino) phenyl]ether |
| | | Content | 0.24 parts by mass (0.285% by mol) | 0.12 parts by mass (2% by mol) | 0.12 parts by mass (2% by mol) | 0.12 parts by mass (1.8% by mol) | 0.06 parts by mass (2% by mol) | 0.14 parts by mass (2% by mol) | 0.12 parts by mass (2% by mol) | 0.12 parts by mass (2% by mol) | 0.12 parts by mass (2% by mol) |
| Reaction temperature | | | 120 °C | 110 °C | 110 °C | 110 °C | 110 °C | 110 °C | 110 °C | 110 °C | 110 °C |
| Reaction time | | | 17 hours | 30 minutes | 30 minutes | 30 minutes | 30 minutes | 4 hours | 30 minutes | 30 minutes | 17 hours |
| Proportion of olefinic double bonds | | | 5% | 36% | 52% | 52% | 80% | 97% | 50% | 63% | 100% |
| Decreased ratio of olefinic double bonds | | | 95 % by mol | 64 % by mol | 48 % by mol | 48 % by mol | 20 % by mol | 3 % by mol | 50 % by mol | 37 % by mol | 0 % by mol |
| Hydrocyanation ratio | | | 95% | 64% | 48% | 48% | 20% | 3% | 50% | 37% | 0% |
| Polymer | Weight average molecular weight (Mw) | | 5,400 | 36,500 | 112,000 | 98,200 | 85,000 | 405,000 | 41,500 | 40,500 | 44,500 |
| | Molecular weight distribution (Mw/Mn) | | 1.3 | 1.18 | 1.69 | 1.83 | 1.53 | 1.99 | 1.25 | 1.35 | 1.03 |
| | Glass-transition temperature (Tg) | | -6.1 | 22.1 | 23.1 | 10.2 | -27.3 | -40 | 13.3 | 6.5 | -6.7 |
| Evaluation of reaction efficiency | | | A | B | C | B | B | B | C | C | D |

In Table 1, "PBD" represents polybutadiene, "PCP" represents polycyclopentene, and "Ni(COD)₂" represents bis(1,5-cyclooctadiene) nickel.

Table 1 indicates that olefinic double bonds in polybutadiene or polycyclopentene in the olefinic double bond-containing polymers reduced and cyano groups were introduced to the polymers produced by the respective reactions in Examples 1 to 8 in which certain cyano group-containing compounds as defined in the present disclosure were used as the cyano group-containing compounds.

In contrast, Table 1 indicates that olefinic double bonds in polybutadiene as the olefinic double bond-containing polymer did not reduce in the reaction and no cyano groups were introduced to the polymer produced by the reaction in Comparative Example 1 in which acrylonitrile, which was not any of certain predetermined cyano group-containing compounds as defined in the present disclosure, was used as the cyano group-containing compound.

### INDUSTRIAL APPLICABILITY

According to the present disclosure, a technique can be provided which enables cyano groups to be efficiently introduced to a polymer while decreasing olefinic double bonds, to thereby enable convenient production of a cyano group-containing polymer.

## Claims

1. A polymer composition comprising:
an olefinic double bond-containing polymer; and
a cyano group-containing compound represented by the following Formula (1):
R-C₂H₄-CN ... (1)
wherein in the Formula (1), R is an unsubstituted alkyl group and has 30 or less carbon atoms; and
a hydrocyanation catalyst, wherein
the hydrocyanation catalyst includes a nickel complex, a co-catalyst and a ligand, wherein
the nickel complex is bis (1,5-cyclooctadiene) nickel,
the co-catalyst is dimethylchloro aluminum, and
the ligand is bis[2-(diphenyl phosphino) phenyl]ether.

2. The polymer composition according to claim 1, wherein the olefinic double bond-containing polymer has a weight average molecular weight of 1,000 or more and 1,000,000 or less, as determined according to the description.

3. The polymer composition according to claim 1 or 2, wherein a content of the cyano group-containing compound relative to the olefinic double bond-containing polymer is 0.05% by mol or more and 200000% by mol or less, as determined according to the description.

4. A method of producing a cyano group-containing polymer comprising:
a reaction step of using the polymer composition according to any one of claims 1 to 3 to subject the olefinic double bond-containing polymer to a hydrocyanation reaction.

5. The method of producing a cyano group-containing polymer according to claim 4, wherein a decreased ratio of olefinic double bonds in the olefinic double bond-containing polymer is 0.1% by mol or more and 100% by mol or less, the decreased ratio representing a ratio of a decrease in olefinic double bonds due to the hydrocyanation reaction, as determined according to the description.

6. The method of producing a cyano group-containing polymer according to claim 4 or 5, wherein
the reaction step is carried out at a temperature higher than or equal to a boiling point of a vinyl group-containing compound represented by the following Formula (2):
R-CH=CH₂ ... (2)
wherein in the Formula (2), R is the same as R in the Formula (1), and wherein the cyano group-containing compound hydrocyanates olefinic double bonds included in the olefinic double bond-containing polymer to produce the vinyl group-containing compound.

7. A cyano group-containing polymer composition comprising:
a cyano group-containing polymer; and
a hydrocyanation catalyst, wherein
the hydrocyanation catalyst includes a nickel complex, a co-catalyst and a ligand, wherein
the nickel complex is bis (1,5-cyclooctadiene) nickel,
the co-catalyst is dimethylchloro aluminum, and
the ligand is bis[2-(diphenyl phosphino) phenyl]ether.

## Patentansprüche

1. Polymerzusammensetzung, umfassend:
ein eine olefinische Doppelbindung enthaltendes Polymer; und
eine eine Cyanogruppe enthaltende Verbindung der folgenden Formel (1):
R-C₂H₄-CN ... (1)
wobei in der Formel (1) R eine unsubstituierte Alkylgruppe ist und 30 oder weniger Kohlenstoffatome hat; und
einen Hydrocyanierungskatalysator, wobei
der Hydrocyanierungskatalysator einen Nickelkomplex, einen Co-Katalysator und einen Liganden enthält, wobei
der Nickelkomplex Bis(1,5-cyclooctadien)-Nickel ist,
der Co-Katalysator Dimethylchloraluminium ist, und
der Ligand Bis[2-(diphenyl phosphino) phenyl]ether ist.

2. Polymerzusammensetzung nach Anspruch 1, wobei das eine olefinische Doppelbindung enthaltende Polymer ein gewichtsmittleres Molekulargewicht von 1.000 oder mehr und 1.000.000 oder weniger aufweist, wie gemäß der Beschreibung bestimmt.

3. Polymerzusammensetzung nach Anspruch 1 oder 2, wobei der Gehalt der eine Cyanogruppe enthaltenden Verbindung, bezogen auf das eine olefinische Doppelbindung enthaltende Polymer, 0,05 Mol-% oder mehr und 200000 Mol-% oder weniger beträgt, wie gemäß der Beschreibung bestimmt.

4. Verfahren zur Herstellung eines eine Cyanogruppe enthaltenden Polymers, umfassend:
einen Reaktionsschritt, bei dem die Polymerzusammensetzung gemäß einem der Ansprüche 1 bis 3 verwendet wird, um das eine olefinische Doppelbindung enthaltende Polymer einer Hydrocyanierungsreaktion zu unterziehen.

5. Verfahren zur Herstellung eines eine Cyanogruppe enthaltenden Polymers nach Anspruch 4, wobei ein verringertes Verhältnis olefinischer Doppelbindungen in dem eine olefinische Doppelbindung enthaltenden Polymer 0,1 Mol-% oder mehr und 100 Mol-% oder weniger beträgt, wobei das verringerte Verhältnis ein Verhältnis der Verringerung der olefinischen Doppelbindungen aufgrund der Hydrocyanierungsreaktion darstellt, wie gemäß der Beschreibung bestimmt.

6. Verfahren zur Herstellung eines eine Cyanogruppe enthaltenden Polymers nach Anspruch 4 oder 5, wobei
der Reaktionsschritt bei einer Temperatur durchgeführt wird, die höher oder gleich dem Siedepunkt einer eine Vinylgruppe enthaltende Verbindung der folgenden Formel (2) ist:
R-CH=CH₂ ... (2)
wobei in der Formel (2) R das gleiche ist wie R in der Formel (1), und wobei
die eine Cyanogruppe enthaltende Verbindung olefinische Doppelbindungen hydrocyaniert, die in dem eine olefinische Doppelbindung enthaltenden Polymer beinhaltet sind, um die eine Vinylgruppe enthaltende Verbindung herzustellen.

7. Cyanogruppe enthaltende Polymerzusammensetzung, umfassend:
ein eine Cyanogruppe enthaltendes Polymer; und
einen Hydrocyanierungskatalysator, wobei
der Hydrocyanierungskatalysator einen Nickelkomplex, einen Co-Katalysator und einen Liganden enthält, wobei
der Nickelkomplex Bis(1,5-cyclooctadien)-Nickel ist,
der Co-Katalysator Dimethylchloraluminium ist, und
der Ligand Bis[2-(diphenyl phosphino) phenyl]ether ist.

## Revendications

1. Composition de polymère comprenant :
un polymère contenant des doubles liaisons oléfiniques ; et
un composé contenant un groupe cyano représenté par la formule (1) suivante :
R-C₂H₄-CN ... (1)
dans laquelle, dans la formule (1), R est un groupe alkyle non substitué et possède au plus 30 atomes de carbone ; et
un catalyseur d'hydrocyanation, dans laquelle
le catalyseur d'hydrocyanation comprend un complexe de nickel, un cocatalyseur et un ligand, dans laquelle
le complexe de nickel est le bis(1,5-cyclooctadiène)nickel,
le cocatalyseur est le diméthylchloroaluminium, et
le ligand est le bis[2-(diphénylphosphino)phényl]éther.

2. Composition de polymère selon la revendication 1, dans laquelle le polymère contenant des doubles liaisons oléfiniques a un poids moléculaire moyen en poids supérieur ou égal à 1 000 et inférieur ou égal à 1 000 000, tel que déterminé selon la description.

3. Composition polymère selon la revendication 1 ou 2, dans laquelle la teneur en composé contenant un groupe cyano par rapport au polymère contenant des doubles liaisons oléfiniques est supérieur ou égal à 0,05 % en moles et inférieur ou égal à 200 000 % en moles, comme déterminé selon la description.

4. Procédé de production d'un polymère contenant des groupes cyano comprenant :
une étape de réaction consistant à utiliser la composition de polymère selon l'une quelconque des revendications 1 à 3 pour soumettre le polymère contenant des doubles liaisons oléfiniques à une réaction d'hydrocyanation.

5. Procédé de production d'un polymère contenant des groupes cyano selon la revendication 4, dans lequel un rapport réduit de doubles liaisons oléfiniques dans le polymère contenant des doubles liaisons oléfiniques est supérieur ou égal à 0,1 % en moles et inférieur ou égal à 100 % en moles, le rapport réduit représentant un rapport d'une diminution des doubles liaisons oléfiniques due à la réaction d'hydrocyanation, comme déterminé selon la description.

6. Procédé de production d'un polymère contenant des groupes cyano selon la revendication 4 ou 5, dans lequel
l'étape de réaction est réalisée à une température supérieure ou égale au point d'ébullition d'un composé contenant un groupe vinyle représenté par la formule (2) suivante :
R-CH=CH₂ ... (2)
dans laquelle, dans la formule (2), R est le même que R dans la formule (1), et dans laquelle
le composé contenant un groupe cyano hydrocyanate les doubles liaisons oléfiniques contenues dans le polymère contenant des doubles liaisons oléfiniques pour produire le composé contenant un groupe vinyle.

7. Composition de polymère contenant des groupes cyano comprenant :
un composé contenant un groupe cyano ; et
un catalyseur d'hydrocyanation, dans laquelle
le catalyseur d'hydrocyanation comprend un complexe de nickel, un cocatalyseur et un ligand, dans laquelle
le complexe de nickel est le bis(1,5-cyclooctadiène)nickel,
le cocatalyseur est le diméthylchloroaluminium, et
le ligand est le bis[2-(diphénylphosphino)phényl]éther.
